(19) Europäisches Patentamt
European Patent Office
Office européen des brevets

(11) **EP 4 654 017 A1**

(12) **EUROPEAN PATENT APPLICATION**

(43) Date of publication:
**26.11.2025 Bulletin 2025/48**

(21) Application number: **25176375.1**

(22) Date of filing: **14.05.2025**

(51) International Patent Classification (IPC):
**G06F 11/00** $^{(2006.01)}$   **G06N 20/00** $^{(2019.01)}$
**G06Q 10/0635** $^{(2023.01)}$

(52) Cooperative Patent Classification (CPC):
**G06N 20/00; G06F 11/008; G06Q 10/0635**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024 US 202418671736**

(71) Applicant: **Microsoft Technology Licensing, LLC
Redmond, WA 98052 (US)**

(72) Inventors:
- **MEYER, Chase Ryan
  Redmond, 98052 (US)**
- **ASOK, Abhijith
  Redmond, 98052 (US)**
- **MOORE, Josh Charles
  Redmond, 98052 (US)**
- **CHEN, Yingying
  Redmond, 98052 (US)**
- **MADHANAGOPAL, Vijaybalaji
  Redmond, 98052 (US)**
- **NAG, Amitabh
  Redmond, 98052 (US)**
- **SHAIKOT, Shariful Hasan
  Redmond, 98052 (US)**
- **KUMAR, Abhishek
  Redmond, 98052 (US)**
- **VELUSWAMI, Senthilkumar
  Redmond, 98052 (US)**
- **DHADDA, Harjinder Singh
  Redmond, 98052 (US)**
- **PERSEMBE, Ahu
  Redmond, 98052 (US)**
- **HOSSAIN, Mohammed Nafij
  Redmond, 98052 (US)**
- **KRAVSOV, Irina
  Redmond, 98052 (US)**
- **MEGHWANSHI, Mayank
  Redmond, 98052 (US)**
- **ZHENG, Lin
  Redmond, 98052 (US)**
- **BOAKYE, Afia
  Redmond, 98052 (US)**
- **DAOUPHARS, Julien
  Redmond, 98052 (US)**
- **BAPAT, Akshay Sudhir
  Redmond, 98052 (US)**

(74) Representative: **CMS Cameron McKenna Nabarro
Olswang LLP
Cannon Place
78 Cannon Street
London EC4N 6AF (GB)**

(54) **COMPOSITE RISK SCORE FOR CLOUD SOFTWARE DEPLOYMENTS**

(57)     The techniques described herein provide a risk assessment framework that enhances the functionality of software deployment systems in cloud-based platforms. Generally described, the present techniques evaluate and consolidate various risk scores to classify a given computing cluster within a software deployment strategy. In various examples, a deployment system collects node-level feature data from the computing cluster to generate a dataset to train a prediction model to calculate constituent risk scores. In another aspect, the deployment system aggregates constituent risk scores to determine an overall risk of software failure. Likewise, the deployment system considers diverse criteria such as virtual machine size and virtual machine density to determine an overall impact of software deployment failure. The deployment system then calculates a composite risk score for the computing cluster as a function of the risk of software deployment failure and the impact of software deployment failure.

EP 4 654 017 A1

FIG. 1

## Description

### BACKGROUND

As cloud computing continues to underpin much of modern computing, more and more data and/or services are stored and/or provided online via network connections. Providing a reliable user experience is an important aspect for cloud-based platforms that offer such computing services. In many scenarios, a cloud-based platform may provide a service to thousands or even millions of users (e.g., customers, clients, tenants, etc.) geographically dispersed around a country, or even the world. In order to provide this service, a cloud-based platform is typically organized into various units of computing resources for the purpose of orchestration. For example, a datacenter hosts clusters containing a plurality of nodes which execute individual computers (e.g., virtual machines).

Accordingly, the cloud-based platform also includes infrastructure for deploying software components utilizing computing hardware to complete certain tasks and/or enable various functionalities of the computing hardware. In a specific example, the cloud-based platform deploys an operating system (OS) to the computing resources (e.g., clusters, nodes). This is referred to as a host operating system deployment. Generally described, an operating system is system software that manages computing hardware and software resources and provides common services for computer programs such as input/output operations and memory allocation.

Due to the large scale and internal diversity of cloud-based platforms, a software deployment introduces significant technical challenges. For instance, a cloud-based platform can comprise thousands of individual computing clusters which themselves can each contain thousands of nodes resulting in millions of nodes to be accounted for when executing a software deployment. In addition, different clusters can have different hardware configurations (e.g., different manufacturers, different specifications) that must also be accounted for. Moreover, such complexities can be further exacerbated when deploying particularly impactful software such as a host operating system.

To that end, many cloud-based platform providers have implemented risk assessment frameworks for evaluating software deployments prior to release and developing a deployment strategy that minimizes the likelihood of deployment failures. However, calculating risk presents additional technical challenges. For instance, many existing methods rely on cluster-level risk assessment which can overlook the internal nuance at the individual node level. As such, these existing methods may derive an inaccurate assessment of risks associated with deploying software to the nodes within a given cluster. Existing risk assessment methods may also fail to account for situations in which a given software deployment requires special attention and/or care. For example, a cluster containing nodes that serve an emergency system naturally requires particular attention to prevent disruptions to critical services. Such nuances may be absent from existing risk assessment models. It is with respect to these and other considerations that the disclosure made herein is presented.

### SUMMARY

The techniques described herein provide a risk assessment framework that enhances the functionality of software deployment systems in cloud-based platforms. Generally described, the present techniques evaluate and consolidate various risk scores to classify computing clusters within a software deployment strategy. As mentioned above, the large scale and internal diversity of cloud-based platforms makes deploying software a highly complex and often risky undertaking. This is especially true when deploying significant software components such as a host operating system (OS) deployment. Moreover, the commitment of modern cloud-based platforms to maximum reliability places further emphasis on minimizing the potential for downtime caused by a deployment failure.

In various examples, a software deployment is program code and/or other mechanisms configured to maintain, correct, add, and/or remove functionality of computing resources within a cloud-based platform. In addition, as mentioned above, the cloud-based platform can be organized into various units of computing resources. For example, the cloud-based platform comprises datacenters that may be distributed around the world to serve various regions (e.g., Western United States, Southern Brazil). Within an individual datacenter, there can be clusters containing a plurality nodes which execute individual computers (e.g., virtual machines).

As such, evaluating the risk of deploying software to such a system as widely distributed as a cloud-based platform represents a significant technical challenge. For instance, a risk assessment for a given software deployment can involve calculating the probability that the software deployment will cause a failure for a given target computing resource (e.g., a node, a cluster). This is generally referred to as a deployment risk. However, many existing methods rely on statistical models to calculate failure rates of each feature of the software deployment for a given cluster. Unfortunately, by calculating these probabilities at the cluster level, existing methods may fail to capture the nuance of individual nodes within the cluster potentially resulting in inaccurate risk calculations.

In contrast, the techniques described herein utilize node-level feature data to generate a training dataset that is utilized to configure a prediction model to calculate a deployment risk score. Utilizing node-level feature data to generate the training dataset enables the prediction model to account for the diversity of individual nodes within a given cluster.

Within the context of the present disclosure, the deployment risk score calculated by the prediction model is considered a first constituent risk score quantifying the deployment risk of the software deployment. In various examples, the prediction model utilizes machine learning frameworks such as EXTREME GRADIENT BOOSTING (XGBoost) and LIGHT GRADIENT BOOSTING MACHINE (LGBM) by MICROSOFT.

In another aspect of the present disclosure, the proposed risk assessment framework identifies a rate of virtual machine interruptions (e.g., reboots, failures) associated with the software deployment. That is, the system identifies an interruption rate that is caused by the software deployment which is then utilized to calculate a second constituent risk score quantifying an annual interruption rate (AIR) impact risk of the software deployment. In various examples, the interruption rate is identified over a predetermined time window (e.g., a two-day time window). In addition, these calculations can be updated over time as software deployments are released to improve risk assessment accuracy for subsequent software deployments.

This is in contrast to existing methods which relied solely on virtual machine availability metrics and direct collection of virtual machine interruption data. In this way, existing methods did not differentiate interruptions that were associated with the software deployment and interruptions associated with other causes (e.g., user error) resulting in inaccurate calculations of the annual interruption rate.

In still another aspect, the proposed risk assessment framework calculates a third constituent risk score that quantifies the likelihood of a malfunction of the software deployment for a given computing hardware configuration. As such, the third constituent risk score can be calculated based on certain features of the node-level feature data defining the hardware configuration of the nodes within a given cluster such as the virtual machine family, manufacturer, central computing unit (CPU), and the like. In various examples, the features are selected based on their impact on the likelihood of malfunction. That is, features that are highly correlated with reliability are specifically selected for the calculation of the third constituent risk score.

Accordingly, this correlation can be determined based on existing testing data referred to herein as "coverage". That is, a hardware configuration that has been extensively tested is said to have high coverage while an untested hardware configuration is said to have low coverage. As such, within the present context, the third constituent impact score can be referred to as a coverage risk score.

Subsequently, the first constituent risk score quantifying the deployment risk of the software deployment, the second constituent risk score quantifying the annual interruption rate impact risk of the software deployment, and the third constituent risk score that quantifies the likelihood of a malfunction of the software deployment for the given computing hardware configuration are aggregated to determine an overall risk of software deployment failure. That is, the overall risk is calculated as a function of three constituent risk scores. As such, the accuracy of the overall risk calculation is enhanced by the individual improvements to accuracy in each of the constituent risk scores.

In addition to the overall risk of software deployment failure, the techniques described herein also include a calculation of the impact of a software deployment failure. That is, where the risk of software deployment failure represents the probability of a software deployment failure occurring, the impact of the software deployment failure represents the consequences that result in the event of a software deployment failure. This can be relevant because the failure of a deployment on different clusters can have varying impacts/consequences.

Like the overall risk calculation described above, the impact of a software deployment failure is calculated as a function of three constituent impact scores. In various examples, the first constituent impact score is calculated based on a number of virtual machine at each of the nodes within a given cluster. In other words, the first constituent impact score represents the virtual machine density of the nodes within the cluster. As such, it can be understood that a failure at a node having a low virtual machine density is less impactful than a failure at a node having a high virtual machine density.

The second constituent impact score quantifies the presence of important entities within the nodes of the cluster such as government entities, critical services such as hospitals, and sensitive data entities such as corporate users storing privileged information in the cloud-based platform. In this way, the impact of a software deployment failure can account for the fact that a failure at a node occupied by an important entity is more impactful than a failure at a node that is not occupied by the important entity.

Similarly, the third constituent impact score quantifies the importance of individual virtual machines based on the volume of computing resources assigned to each virtual machines (e.g., memory, computing cores, storage). This volume of resources can be referred to as the "size" of the virtual machine. That is, a virtual machine having a greater volume of computing resources is said to be larger than a virtual machine having a relatively lesser volume of computing resources. Accordingly, the provider of the cloud-based platform can charge users to use their computing infrastructure to execute various virtual machines. As such, the price of a given virtual machine can be determined based on the size of the virtual machine with larger virtual machines being more expensive than smaller virtual machines. In other words, a larger virtual machine can be understood to be nominally more important than a smaller virtual machine in that an entity operating the larger virtual machine is most likely paying a significant price for access to the larger virtual machine and thus executes important tasks on said virtual machine (e.g., payroll, central application management). In this way, the third constituent impact score accounts for the fact that failure at a node containing larger virtual machines is more impactful than at a node containing smaller virtual machines.

Accordingly, the three constituent impact scores are aggregated into an overall impact of software deployment failure. Subsequently, the overall risk of software deployment failure and overall impact of software deployment failure are themselves aggregated to calculate a composite risk score representing the three constituent risk scores and the three constituent impact scores described above. Generally described, the composite risk score represents the risk of releasing a given software deployment to a given cluster. As such, the composite risk score of the cluster can be compared against various threshold risk scores to classify the cluster into a deployment category defining an associated deployment strategy. For instance, the composite risk score can be classified as a "PASS" indicating that the cluster is sufficiently low-risk such that the software deployment can be freely distributed to the nodes of the cluster. In another example, the composite risk score is classified as a "SEQUENTIAL" indicating that additional care should be taken when deploying to the cluster (e.g., in waves on a cluster-by-cluster basis). In still another example, the composite risk score can be classified as a "BLOCK" indicating that the cluster is too risky to receive the software deployment and that additional manual investigation may be necessary prior to deploying to the cluster. Accordingly, the classifications are utilized to generate deployment recommendations regarding the cluster.

These recommendations as well as other information such as composite risk score classifications and deployment progress are displayed in a deployment dashboard user interface (UI) which can be accessed by an entity controlling the software deployment (e.g., a deployment team). In this way, the techniques described herein ensure that high-value and high-risk deployments such as host operating system deployments are handled with the necessary care, thereby reducing the likelihood of failure and its associated impacts resulting in improved reliability and resiliency for cloud-based platforms.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

## BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.

FIG. 1 is a block diagram of a deployment system for assessing a composite risk score for releasing a software deployment to a computing cluster.

FIG. 2 illustrates additional details of node-level feature data that is extracted from the nodes of a computing cluster to generate a training dataset for training a prediction model to calculate a deployment risk and an annual interruption rate impact risk.

FIG. 3 illustrates a calculation and classification of composite risk scores to determine deployment groups based on the level of risk.

FIG. 4 is an example user interface for a deployment dashboard for viewing and managing aspects of a software deployment.

FIG. 5A is a flow diagram showing aspects of a process for calculating a risk of deployment failure component of a composite risk score for a software deployment in a computing cluster.

FIG. 5B is a flow diagram showing aspects of a process for calculating an impact of deployment failure component of a composite risk score and calculating the composite risk score based on the risk of deployment failure and impact of deployment failure components.

FIG. 6 is a computer architecture diagram illustrating an illustrative computer hardware and software architecture for a computing system capable of implementing aspects of the techniques and technologies presented herein.

FIG. 7 is a diagram illustrating a distributed computing environment capable of implementing aspects of the techniques and technologies presented herein.

## DETAILED DESCRIPTION

The techniques described herein provide a risk assessment framework that enhances the functionality of software deployment systems in cloud-based platforms. Generally described, the present techniques evaluate and consolidate various risk scores to classify computing clusters within a software deployment strategy. As mentioned above, the large scale and internal diversity of cloud-based platforms makes deploying software a highly complex and often risky undertaking. This is especially true when deploying significant software components such as in a host operating system (OS) deployment. Moreover, the commitment of modern cloud-based platforms to maximum reliability places further emphasis on minimizing the potential for downtime caused by a deployment failure.

As such, the risk assessment framework extracts and analyzes node-level feature data to capture the nuance of individual nodes within a cluster thereby enhancing the accuracy of a final risk assessment. In a specific example, the risk assessment framework utilizes a prediction model that is trained on the node-level feature data to calculate a deployment risk for a software deployment within the context of a given computing cluster. In addition, the proposed risk assessment framework also accounts for factors that existing methods may have failed to capture such as virtual machine size and node-level hardware configurations.

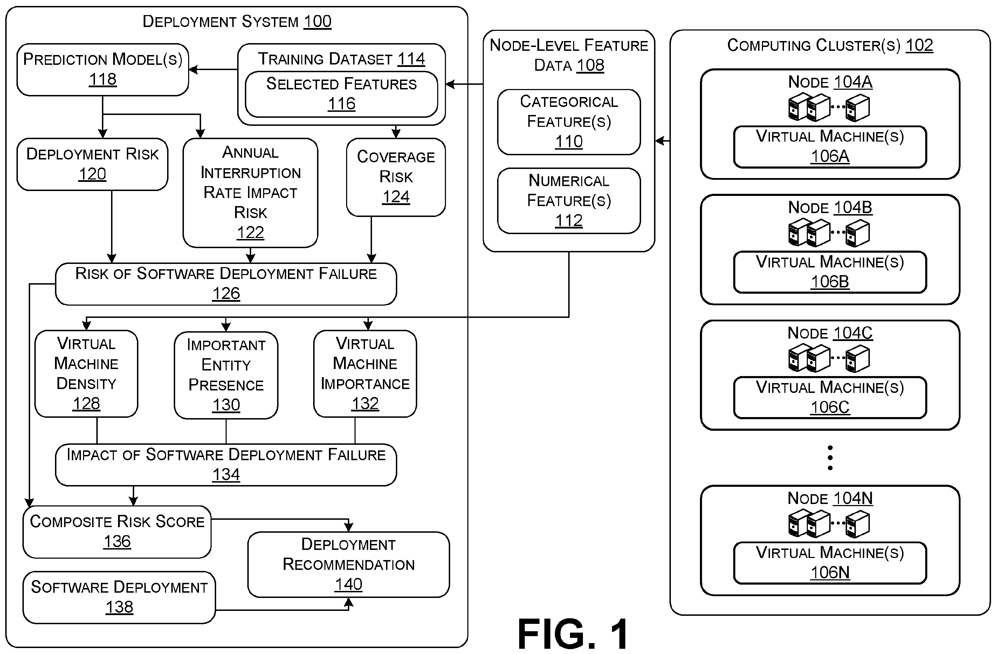

Various examples, scenarios, and aspects related to the disclosed techniques are described below with respect to FIGS. 1-7.

FIG. 1 illustrates a deployment system 100 that provides that implements the risk assessment framework described above. Accordingly, the deployment system 100 is configured to analyze a computing cluster 102 containing a plurality of nodes 104A-104N. In various examples, the computing cluster 102 is hosted within a datacenter in which an individual node 104A is a unit of computer hardware (e.g., rack server) having a given hardware configuration of central processing units (CPUs), graphical processing units (GPUs), memory, storage, networking devices, and so forth. As such, a node 104A can be configured to execute one or more virtual machines 106A. An individual virtual machine 106A is a virtualization or emulation of a computer system using the hardware configuration of the parent node 104A that provides the functionalities of a standalone physical machine. Accordingly, it should be understood that different nodes 104 within a computing cluster 102 can have different computing hardware configurations, specifications, functionalities and so forth.

To evaluate the risk of deploying to the computing cluster 102, the deployment system 100 extracts node-level feature data 108 from the nodes 104A-104N of the computing cluster 102. Generally described, the node-level feature data 108 comprises data defining the configuration of various aspects of each node 104A-104N of the computing cluster 102. As such, the node-level feature data 108 is organized into categorical features 110 and numerical features 112. In various examples, a categorical feature 110 is identifying information regarding the hardware configuration and specifications of an associated node 104A. For instance, categorical features can include a virtual machine generation, stock keeping unit (SKU), and/or family defining the available functionalities of the virtual machines 106A-106N within the respective nodes 104A-104N. In another example, the categorical features 110 include information on the hardware configuration of the node 104A such as the central processing unit type and the original equipment manufacturer (OEM).

Conversely, the numerical features 112 is information regarding the numerical characteristics of the node 104A. In one example, the numerical features 112 include data defining the volume of available and/or total memory and size parameters for the virtual machines 106A-106N within the respective nodes 106A-106N (e.g., allocated computing cores, memory, storage, network resources). In another example, the numerical features 112 include reliability metrics for the node 104A such as uptime and annual interruption rate (AIR) metrics.

Accordingly, some or all of the node-level feature data 108 is processed by the deployment system 100 to generate a training dataset 114 comprising a set of selected features 116. As will be elaborated upon below, the deployment system 100 encodes the node-level feature data 108 (e.g., the categorical features 110) to generate the training dataset 114 such that the selected features 116 are compatible for processing by a machine learning framework such as the prediction model 118. In a specific example, the training dataset 114 is generated via a one-hot encoding process in which the node-level feature data 108 is converted into a numerical representation (e.g., a binary vector). It should be understood that the training dataset 114 can be compiled from a plurality of computing clusters 102. Moreover, the training dataset 114 can be further refined over time by periodically collecting additional node-level feature data 108.

Subsequently, the prediction model 118 is configured by the training dataset 114 to calculate a deployment risk 120 associated with deploying software to the nodes 104A-104N of the computing cluster 102. Stated another way, the prediction model 118 is trained by the training dataset 114 to perform node-level prediction to detect potentially high-risk deployment scenarios. In various examples, the prediction model utilizes machine learning frameworks such as an EXTREME GRADIENT BOOSTING (XGBoost) classifier and the LIGHT GRADIENT BOOSTING MACHINE (LGBM) algorithm by MICROSOFT. In addition, the prediction model 118 can undergo periodic (e.g., daily) adjustments to improve prediction performance such as daily hyperparameter tuning via grid search. In various examples, the adjustments can be communicated to other components of the cloud-based platform to provide visibility into model performance. For instance, model performance metrics and/or hyperparameter tuning can be captured in daily emails to a system administrator or engineer overseeing deployment operations.

As mentioned above, a cloud-based platform can contain thousands of individual computing clusters 102, each of which can contain thousands of individual nodes 104A-104N respectively. Consequently, the deployment system 100 may be faced with analyzing millions of individual nodes 104 when extracting node-level features data 108 and generating the training dataset 114. As such, the deployment system 100 can be configured with intelligent feature selection logic to filter the node-level feature data 108. In various examples, the feature selection logic chooses certain node-level features that are highly correlated with deployment results. In this way, the node-level features data 108 and the prediction model 118 capture the node-level nuance that is often lacking in cluster-level analysis thereby enhancing the accuracy of deployment risk calculations. Within the context of the present disclosure, the deployment risk 120 is a first constituent risk score quantifying the risk of deploying to the nodes 104A-104N.

Similarly, the prediction model 118 can also be utilized to calculate an annual interruption rate impact risk 122. Generally described, the annual interruption rate is a projected number of reboots and/or other interruptions (e.g., blips, pauses) to normal operations to a given number of virtual machines 106. In a specific example, annual interruption rate is defined as the projected number of interruptions a user will experience per one hundred virtual machine-years (e.g., if the user rents one hundred virtual machines 106A-106N and run them for one year or rents one virtual machine 104A and runs it for one hundred years). A conventional approach to calculating an annual interruption rate impact of a given software deployment typically relied solely upon virtual machine availability (VMA) tables and the direct collection of virtual machine reboots, failures, and/or other interruptions. However, such an approach includes interruptions that were not related to the given software deployment thereby introducing noise to the calculation.

In contrast, the deployment system 100 is configured with root cause analysis (RCA) filters to specifically identify deployment related virtual machine interruptions. In addition, for a given software deployment, the deployment system 100 can identify a virtual machine interruption rate that occurs within a predetermined time window (e.g., two days) to limit the introduction of irrelevant interruption records (e.g., interruptions that are not associated with the software deployment). Moreover, in cases where issues prevent record capture during deployment, the deployment system 100 can gather data from additional sources such as version switch tables and execution tables to uncover deployment histories and outcomes. In this way, the annual interruption rate impact risk 122 can be calculated on an individual node 104A basis thereby improving accuracy. Furthermore, the node-level analysis for calculating the annual interruption rate impact risk 122 can also be utilized as feedback to refine the quality of the training dataset 114 over time. Accordingly, the annual interruption rate impact risk 122 can be considered a second constituent risk score.

The deployment system 100 then calculates a third constituent risk score comprising a coverage risk 124 quantifying a likelihood of malfunction of a given software deployment at the nodes 104A-104N based on a subset of or all of the features of the node-level feature data 108 (e.g., the categorical features 110). As mentioned above, such features can be selected based on their impact on the likelihood of malfunction. That is, features that are highly correlated with reliability are specifically selected for the calculation of the coverage risk 124. Namely hardware features such as virtual machine SKU, family, generation and so forth. Accordingly, this correlation can be determined based on existing testing data referred to herein as "coverage". That is, a hardware configuration that has been extensively tested is said to have high coverage while an untested hardware configuration is said to have low coverage. In addition, due to the vast diversity of available computing hardware, certain hardware features such as a motherboard product name and/or hard drive model can be grouped into higher level features such as a hardware manufacturer.

In a specific example, the coverage risk 124 is calculated by first preparing the node-level feature data 108 by organizing configuration tables with selected features of the node-level feature data 108. The configuration tables can be divided into "updated" configuration tables and "not updated" configuration tables according to a host operating system version of each node 104A-104N. The deployment system 100 then assigns a risk score to the outputs of each of the features in the "updated" configuration tables. Then, the deployment system 100 calculates a linear combination of the risk scores for each feature in the "not updated" configuration tables. The risk scores are then aggregated across all of the "updated" configuration tables and "not updated" configuration tables (e.g., a mean value) to determine the coverage risk 124.

Accordingly, the deployment system 100 can then calculate an overall risk of software deployment failure 126 quantifying the probability of a deployment failure. This is accomplished by aggregating the first constituent risk score quantifying the deployment risk 120 and the second constituent risk score quantifying the annual interruption rate impact risk 122. The third constituent risk score quantifying the coverage risk 124 is utilized as a screening tool to determine whether a given computing cluster has sufficient coverage (e.g., hardware testing). In various examples, the risk of software deployment failure 126 is calculated as the average of the three constituent risk scores 120-124. Alternatively, the risk of software deployment failure 126 is calculated as a function of the three constituent risk scores 120-124 in which the three constituent risk scores 120-124 can be weighted to optionally emphasize or deemphasize each within the overall risk of software deployment failure 126. In still another example, the deployment system 100 calculates the risk of software deployment failure 126 utilizing the distance to target (DTT) method on the first constituent risk score 120 and the second constituent risk score 122 as shown in the example equation (1) below.

$$CRS_{Risk} = \sqrt{\frac{DTT(R_D)^2 + DTT(R_A)^2}{2}} \qquad (1)$$

Here, $CRS_{Risk}$ is the risk of software deployment failure 126, $R_D$ is the deployment risk 120 and $R_A$ is the annual interruption rate impact risk 122. As mentioned, the third constituent risk score 124 is utilized as a screening to determine whether a given computing cluster has sufficient coverage (e.g., hardware testing). Accordingly, an elevated coverage risk 124 results in a correspondingly elevated risk of software deployment failure 126. For example, an untested hardware feature can cause the deployment system 100 to classify the computing cluster 102 for SEQUENTIAL deployment as mentioned above. In a specific example, this is accomplished by increasing the risk of software deployment failure 126.

In addition to the three constituent risk scores 120-124, the deployment system 100 also calculates a first constituent impact score quantifying a virtual machine density 128 within the computing cluster 102 (e.g., the number of virtual machines 106A-106N divided by the number of nodes 104A-104N). Like the examples described above, the virtual machine density 128 can be calculated based on the node-level feature data 108. As such, it can be understood that a failure at a node 104A and/or computing cluster 102 having a low virtual machine density 128 is less impactful than a failure at a node 104A and/or computing cluster 102 having a high virtual machine density 128.

In addition, the deployment system 100 can account for that status of various entities operating a given virtual machine or set of virtual machines 106A by calculating a second constituent impact score quantifying an important entities presence 130 within the nodes 104A-104N of the computing cluster 102 such as government entities, critical services such as hospitals, and sensitive entities such as corporate users storing privileged data in the cloud-based platform. In this way, the deployment system 100 can account for the fact that a failure at a node 104A and/or computing cluster 102 occupied by an important entity is more impactful than a failure at a node 104A and/or computing cluster 102 that is not occupied by the important entity.

Similarly, the deployment system 100 calculates a third constituent impact score quantifying a virtual machine importance 132 for each of the virtual machines 106A-106N of the computing cluster 102. Generally, described, the virtual machine importance 132 is calculated based on comparing the volume of computing resources assigned to each of the virtual machines 106A-106N (e.g., memory, computing cores, storage) against a threshold volume of computing resources as well as the entity that operates said virtual machines 106A-106N. This volume of resources can be referred to as the "size" of the virtual machine 106A. That is, a virtual machine 106A having a greater volume of computing resources is said to be larger than a virtual machine 106B having a relatively lesser volume of computing resources. Accordingly, the provider of the cloud-based platform can charge various entities (e.g., organizations, individual users) in exchange for using the computing infrastructure to execute various virtual machines 106. As such, the price of a given virtual machine 106A can be determined based on the size of the virtual machine 106A. That is, a larger virtual machine 106A is more expensive than a smaller virtual machine 106B.

As such, a larger virtual machine 106A can be understood to be nominally more important than a smaller virtual machine 106B in that an entity operating the larger virtual machine 106A is most probably paying a significant price for access to the larger virtual machine. Consequently, the larger virtual machine 106A is most probably utilized to execute especially important and/or resource intensive tasks (e.g., payroll, central application management). As such, the size of various virtual machines 106 can be compared against a threshold size in which a virtual machine 106A that is greater than or equal to the threshold size is deemed "important". In addition, a virtual machine 106A can be deemed "important" irrespective of size if the virtual machine 106A is operated by an important entity (e.g., a government entity, a critical service entity, a sensitive corporate entity). In this way, the virtual machine importance 132 quantified by the third constituent impact score accounts for the fact that failure at a node 104A and/or computing cluster 102 containing a larger virtual machine 106A is more impactful than the same failure at a node 104A and/or computing cluster 102 containing a smaller virtual machine 106B.

Similar to the above examples, the deployment system 100 calculates an overall impact of software deployment failure 134 by aggregating the first constituent impact score quantifying the virtual machine density 128, the second constituent impact score quantifying the important entity presence 130, and the third constituent impact score quantifying the virtual machine importance 132. In various examples, like the risk of software deployment failure 126 described above, the impact of software deployment failure 134 is the average of the three constituent impact scores 128-132. Alternatively, the impact of software deployment failure 134 is calculated as a function of the three constituent risk scores 128-132 in which the three constituent risk scores 128-132 can be weighted to optionally emphasize or deemphasize each within the overall impact of software deployment failure 134. In another example, the deployment system 100 calculates the impact of software deployment failure 134 utilizing the distance to target method as shown in the example equation (2) below.

$$CRS_{Impact} = \sqrt{\frac{DTT(I_D)^2 + DTT(I_C)^2 + DTT(I_P)^2}{3}} \qquad (2)$$

Here, $CRS_{Impact}$ is the impact of software deployment failure 134, $I_D$ is the virtual machine density 128, $I_C$ is the important entity presence 130 representing the presence of important customers, and $I_P$ is the virtual machine importance 132 representing the size and thus price of individual virtual machines 106A-106N.

Accordingly, the risk of software deployment failure 126 and the impact software deployment failure 134 are aggregated by the deployment system 100 into a composite risk score 136 for the computing cluster 102. In various examples, the composite risk score 136 is the average of the risk of software deployment failure 126 and the impact software deployment failure 134. In this way, the composite risk score 136 represents both the probability of a deployment failure as well as the operational impact in the event of the deployment failure. The deployment system 100 then utilizes the composite risk score 136 in conjunction with a pending software deployment 138 to generate a deployment recommendation 140 that classifies the computing cluster 102 into a deployment category according to dynamically calculated thresholds based on the software deployment 138. For instance, a minor software deployment 138 that introduces few consequential changes may result in more relaxed thresholds compared to a host operating system software deployment 138 that introduces significant changes. Furthermore, the deployment system 100 can adjust risk calculations based on a deployment type of the software deployment 138. For instance, the composite risk score 136 for a host operating system deployment may weigh various factors differently from a virtual hard disk deployment.

In various examples, the deployment recommendation 140 classifies the composite risk score 136 as a "PASS" indicating that the computing cluster 102 is sufficiently low-risk such that the software deployment 138 can be freely distributed to the nodes 104A-104N of the computing cluster 102. In another example, the deployment recommendation 140 classifies the composite risk score 136 as a "SEQUENTIAL" indicating that additional care should be taken when deploying to the computing cluster 102. For instance, the software deployment 138 is released in a cluster-by-cluster basis (e.g., in waves). In still another example, the deployment recommendation 140 classifies the composite risk score 136 as a "BLOCK" indicating that the computing cluster 102 is too risky to receive the software deployment 138 and that additional investigation may be necessary prior to deploying to the computing cluster 102. The deployment recommendation 140 can then be utilized to automate the deployment process through integration with a release mechanism that oversees the rollout of the software deployment 138. In this way, the process of releasing the software deployment 138 is empirically informed by a risk assessment framework that accurately captures the nuances and potential risks of the target computing cluster 102. Moreover, the deployment system 100 can also implement functionality to enable manually overriding the deployment recommendation 140 based on feedback. For example, an external user, having full knowledge of the risks involved (e.g., a cloud computing customer) may request an override for a "BLOCK" classification for a computing cluster they operate.

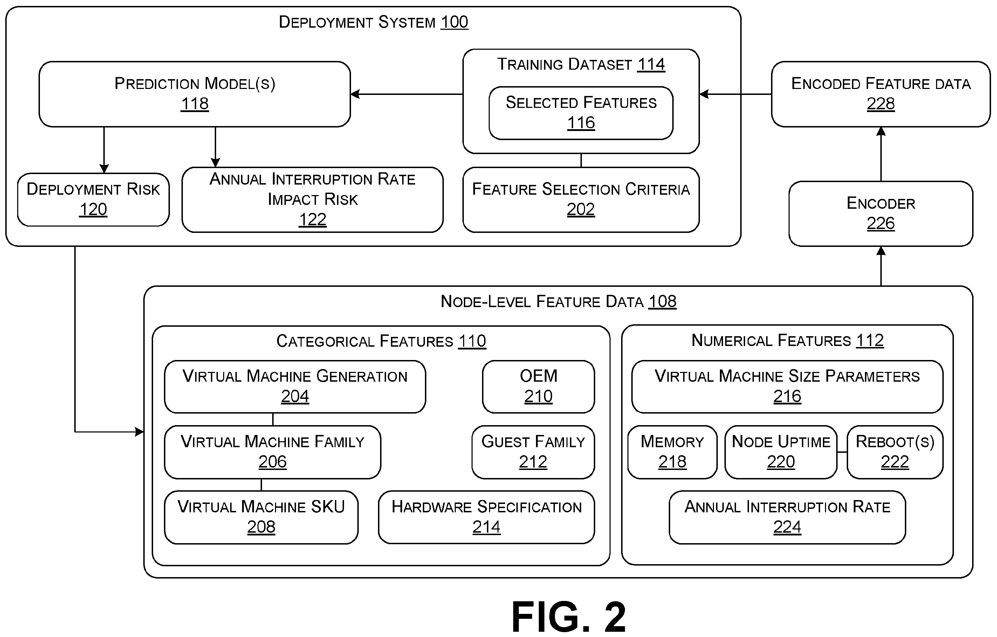

Turning now to FIG. 2 additional details are shown and described regarding feature selection and preparation of the node-level feature data 108 for calculating the deployment risk 120 and annual interruption rate impact risk 122. As mentioned above, a cloud-based platform can contain thousands of individual computing clusters 102, each of which can respectively contain thousands of individual nodes. Consequently, extracting node-level features data 108 across a cloud-based platform can involve evaluating millions of individual nodes. As such, the deployment system 100 is configured with feature selection criteria 202 to filter the node-level feature data 108. In various examples, the feature selection logic 202 chooses certain node-level features that are highly correlated with deployment results. In this way, the node-level features data 108 and the prediction model 118 capture the node-level nuance that is often lacking in cluster-level analysis thereby enhancing the accuracy of deployment risk calculations.

As shown in FIG. 2, the deployment system 100 receives the node-level feature data 108 comprising categorical features 110 and numerical features 112 from a computing cluster. The categorical features 110 include a virtual machine generation 204, a virtual machine family 206, and a virtual machine SKU 208. Collectively, the virtual machine generation 204, the virtual machine family 206, and the virtual machine SKU 208 specify the functionalities and capabilities of a given virtual machine. For instance, the virtual machine generation 204 can define a release date of a virtual machine (e.g., a first-generation virtual machine is older than a second generation virtual machine). As such, the virtual machine generation 204 can also define which technologies are supported by virtual machines of that generation such as hardware types, storage formats, firmware standards, and so forth. That is, a newer virtual machine generation 204 may support a broader range of technologies in comparison to an older virtual machine generation 204 as new standards are introduced over time.

Within a virtual machine generation 204, the virtual machine family 206 defines a performance category for the associated virtual machine based on its hardware configuration. For example, a virtual machine of a given virtual machine family 206 may have computing performance and memory configurations best suited for entry level workloads like development and test and/or code repositories. In another example, a virtual machine of a different virtual machine family 206 may have a hardware configuration that is optimized for heavy in-memory applications such as a relational database management system.

Likewise, a virtual machine family 206 can include various virtual machine SKUs 208. For instance, consider again the virtual machine family 206 having the hardware configuration that is optimized for in-memory applications. Accordingly, within the virtual machine family 206 one virtual machine SKU 208 may offer up to four terabytes (4 TB) of random-access memory (RAM) and up to 128 virtual computing cores. A different virtual machine SKU 208 within the same virtual machine family 206 may offer up to twelve terabytes (12 TB) of random-access memory and 416 virtual computing cores.

Other examples of categorical features 110 include the original equipment manufacturer (OEM) 210 that supplied the hardware for the associated node, a guest family 212 specifying the operating system that operates at the node, and a hardware specification 214 defining the hardware configuration of the associated node such as the type of central processing unit, storage disk configuration, and other aspects.

Where the categorical features 110 provided identifying information with respect to the associated node, the numerical features 112 define the specific configurations of the node. For instance, the numerical features include the virtual machine size parameters 216 such as the number of allocated computing units, virtual computing cores, cache size, memory size, network bandwidth, and so forth. As such, the virtual machine size parameters 216 correspond to the virtual machine generation 204, virtual machine family 206, and virtual machine SKU 208. Moreover, the virtual machine size parameters 216 are compared against a threshold virtual machine size to detect important virtual machines. As mentioned above, large virtual machines (e.g., virtual machines having a large volume of allocated computing resources) are deemed important due to the typically high price paid by users of such virtual machines as well as the important applications such virtual machines are used to execute (e.g., a central payroll application).

Another example of the numerical features 112 include the volume of available memory 218 within the node including memory available for virtual hard disk caches, virtual machine partitions, and free space. In another example, the numerical features 112 include a measurement of node uptime 220 including metrics for reboots 222 such as unexpected reboots times, network boot request times, and power cycle times. Similarly, the numerical features 112 can also include metrics for the annual interruption rate 224 such as a general interruption record, standard deviation, and slope. In addition, the annual interruption rate 224 metrics can be defined over a predefined time window pre-deployment and/or post-deployment (e.g., five days). In this way, the annual interruption rate 224 can be isolated to those associated with deployment issues (e.g., issues resulting from software deployments) thereby improving accuracy for subsequent software deployments. Stated another way, the annual interruption rate 224 metrics capture service interruptions associated with prior software deployments and can thus be factored into risk assessments for current software deployments. In addition, it should be understood that while specific features are described above, the node-level feature data 108 can include any number and type of feature data extracted from a computing cluster.

The node-level feature data 108 is then processed by an encoder 226 to generate the encoded feature data 228. Generally described, encoding the node-level feature data 108 converts the format of the node-level feature data 108 for compatibility with a computational tool such as the prediction model 118. For instance, textual information can be converted to a numerical representation to enable analysis by computational models. In a specific example, the encoder 226 is a one-hot encoder that generates a binary vector representation of the categorical features 110. In this case, only the categorical features 110 are encoded as the numerical features 112 are already numerical representations and thus do not require reformatting for compatibility with the prediction model 118.

As a result of the encoding, the number of categorical features 110 can increase from a relatively small number (e.g., twenty) to over thousands of individual binary vectors representing the categorical features 110. As such, the deployment system 100 utilizes the feature selection criteria 202 mentioned above to select certain features from the encoded feature data 228 for inclusion in the selected features 116 of the training dataset 114. As mentioned above, the feature selection criteria 202 selects for features that most closely correlate with deployment outcomes. In this way, the training dataset 114 provides the prediction model 118 with the most relevant aspects of a computing cluster for performing risk calculations.

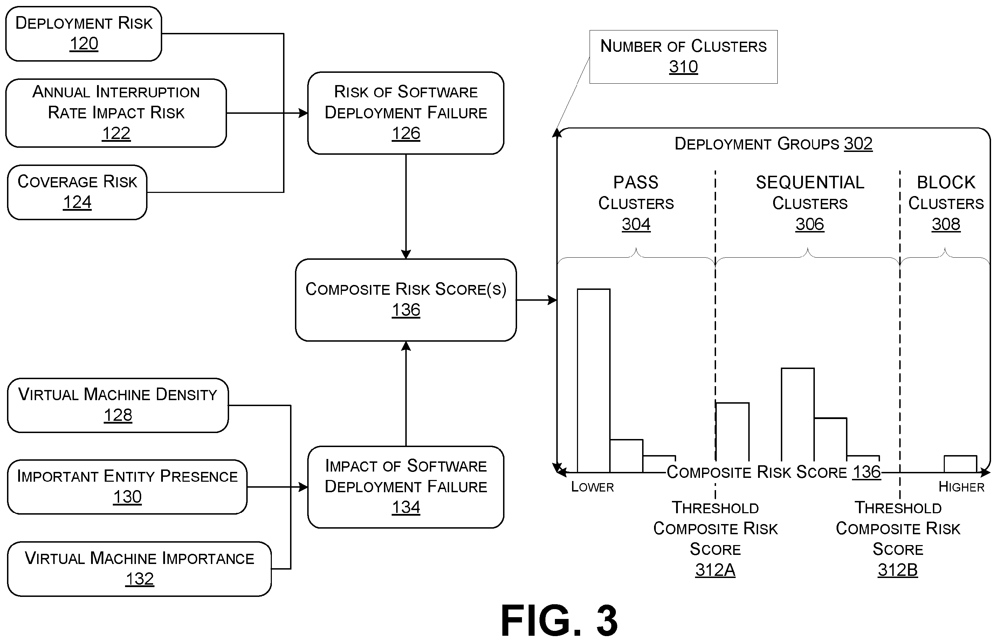

Proceeding to FIG. 3, additional aspects of risk score calculation and classification are shown and described. As discussed above, the deployment system calculates three constituent risk scores 120-124 to determine an overall risk of software deployment failure 126 for a given computing cluster. Likewise, the deployment system calculates three constituent impact scores 128-132 to determine an overall impact of software deployment failure 134 for the computing cluster. Subsequently, the risk of software deployment failure 126 and the impact of software deployment failure 134 are aggregated to calculate a composite risk score 136 of deploying to the computing cluster.

Accordingly, the composite risk score 136 for the computing cluster is classified within a deployment group 302. As shown in FIG. 3, the deployment groups 302 can be formatted as a graph in which computing clusters are classified into PASS clusters 304, SEQUENTIAL clusters 306, and BLOCK clusters 308 that is plotted as a number of clusters 310 versus composite risk score 136. As mentioned above, a composite risk score 136 for a given computing cluster that is classified as a PASS cluster 304 indicates that the computing cluster is sufficiently low-risk such that a software deployment can be freely distributed to the nodes within. Alternatively, a composite risk score 136 for a computing cluster that is classified as a SEQUENTIAL cluster 306 indicates that additional care should be taken when deploying to the computing cluster. In still another example, the composite risk score 136 is classified as a BLOCK cluster 308 indicating that the computing cluster is too risky to receive the software deployment and that additional manual investigation may be necessary prior to deploying to the computing cluster.

As such, the deployment groups 302 are delineated by a first threshold composite risk score 312A and a second threshold composite risk score 312B. The first threshold composite risk score 312A defines a boundary between the PASS clusters 304 and the SEQUENTIAL clusters 306 such that a composite risk score 136 that is lower than the first threshold composite risk score 312A is classified as a PASS cluster 304. Conversely, a composite risk score 136 that is equal to or greater than the first threshold composite risk score 312A is classified as a SEQUENTIAL cluster 306. Likewise, the second threshold composite risk score 312B defines a boundary between the SEQUENTIAL clusters 306 and the BLOCK clusters 308 such that a composite risk score 136 that is lower than the second threshold composite risk score 312B is classified as a SEQUENTUAL cluster 306. Conversely, a composite risk score 136 that is equal to or greater than the second threshold composite risk score 312B is classified as a BLOCK cluster 308. Furthermore, computing clusters having a low coverage percentage (e.g., an elevated coverage risk 124) can be automatically placed into the SEQUENTIAL clusters 306 deployment group 302 as risk assessment may be inaccurate due to insufficient hardware testing.

Moreover, the threshold composite risk scores 312A and 312B can be dynamically calculated based on the software deployment at hand. For instance, a minor software deployment that introduces few consequential changes may be deployed according to more relaxed (e.g., elevated) threshold composite risk scores 312A and 312B in relation to a software deployment that introduces significant changes. For example, a host operating system deployment can result in much stricter (e.g., lower) threshold composite risk scores 312A and 312B to minimize the likelihood of deployment failures.

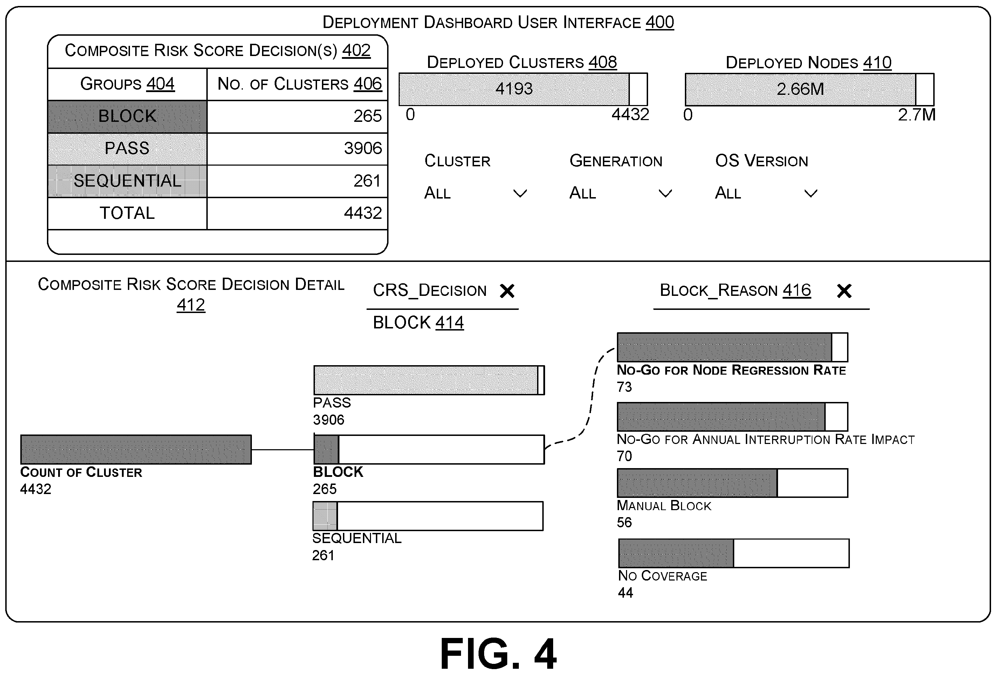

Turning now to FIG. 4, aspects of a deployment dashboard user interface 400 are shown and described. Within the example of FIG. 4, consider a host operating system deployment that is being released to all computing clusters of a cloud-based platform. As such, the composite risk score decisions user interface element 402 shows the various deployment groups 404 and the number of clusters 406 in each group 404. In the present example, the host operating system deployment is being released to a total of 4432 computing clusters. Accordingly, the deployment dashboard user interface 400 includes a display of currently deployed clusters 408 and currently deployed nodes 410. As shown, the deployed clusters 408 and the deployed nodes 410 indicate that the host operating system deployment is nearing completion with 4193 clusters out of 4432 having received the host operating system deployment for a total of 2.66 million nodes out of 2.7 million nodes. In various examples, the view of the deployment dashboard user interface 400 can be customized based on the deployment type being executed.

In the lower half of the deployment dashboard user interface 400, a user can investigate details regarding a specific deployment group 404 via a composite risk score decision detail 412. For instance, as shown in the present example, the user has selected the BLOCK CRS_Decision 414. As such, the deployment dashboard user interface 400 shows that out of 4432 total clusters, 265 are classified "BLOCK". The user can then expose additional details regarding the BLOCK CRS_Decision 414 with a BLOCK_REASON 416. For example, of the 265 computing clusters that are classified into the BLOCK group 404 seventy-three are classified as such due to an elevated node regression rate. In this way, the deployment dashboard user interface 400 enables a user to intuitively monitor outgoing software deployments within the risk assessment framework of the composite risk score. In various examples, the deployment dashboard user interface 400 also provides functionality for manually overriding automatically assigned deployment decisions shown in the composite risk score decision detail 412. This overriding can be utilized to accommodate specific requests (e.g., from a cloud computing customer). For instance, a computing cluster that is classified as a BLOCK 414 with a "No Coverage" BLOCK_REASON 416 can be manually overridden to a different CRS_Decision in response to customer feedback.

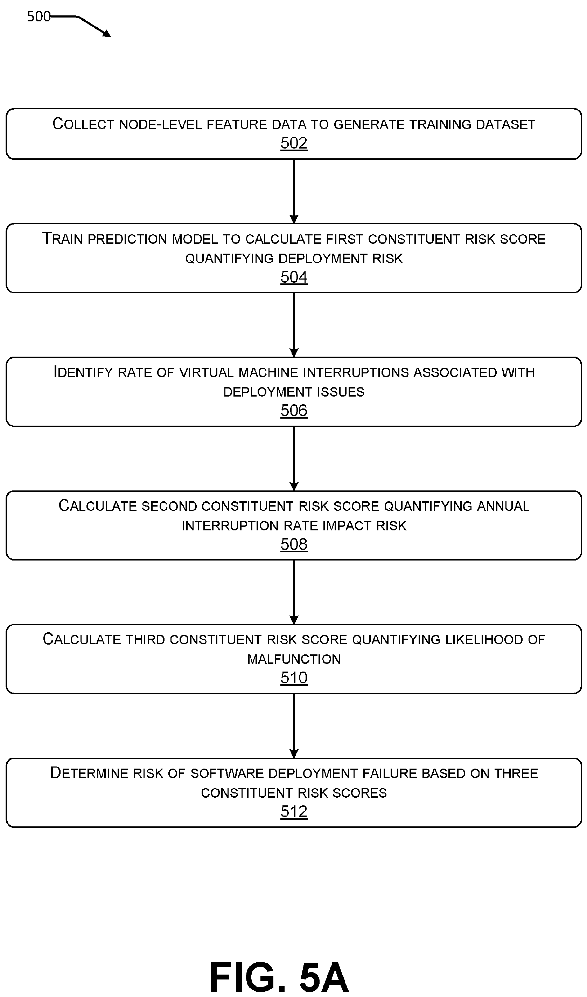

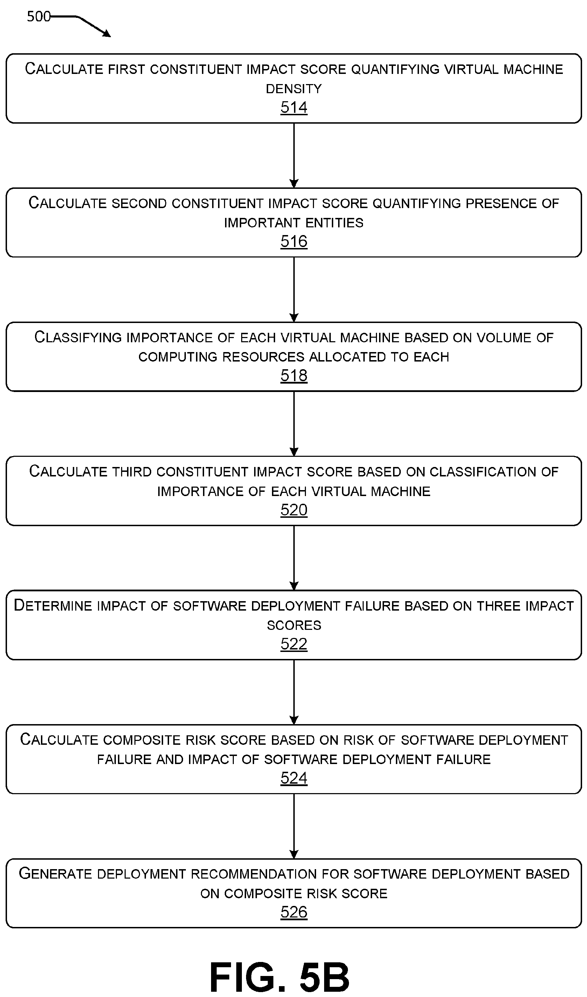

Turning now to FIG. 5A and 5B, aspects of a process 500 for calculating a composite risk score for a software deployment in a computing cluster are shown and described. With respect to FIG. 5A, the process 500 begins at operation 502 where a deployment system collects node-level feature data from the nodes of a computing cluster to generate a training dataset. As mentioned above, the node-level feature data includes categorical features and numerical features comprising data defining the specific hardware configuration of the nodes within the computing cluster.

Then, at operation 504, the deployment system trains a prediction to calculate a first constituent risk score quantifying a deployment risk associated with releasing the software deployment to the nodes of the computing cluster. In various examples, the prediction model utilizes machine learning frameworks such as an EXTREME GRADIENT BOOSTING (XGBoost) classifier and the LIGHT GRADIENT BOOSTING MACHINE (LGBM) algorithm by MICROSOFT. In addition, the prediction model 118 can undergo periodic adjustments to improve prediction performance such as daily hyperparameter tuning via grid search.

Next, at operation 506, the deployment system identifies a rate of virtual machine interruptions at the nodes associated with deployment issues. As described above, isolating interruption metrics to those associated with deployment issues enhances the accuracy of risk calculations by eliminating irrelevant data and reducing noise.

Subsequently, at operation 508, the deployment system calculates a second constituent risk score quantifying an annual interruption impact risk associated with the nodes and the software deployment. In addition, the calculation of the annual interruption impact risk can be improved over time by collecting performance data from subsequent software deployments to increase the understanding of virtual machine interruptions associated with deployment issues.

Next, at operation 510, the deployment system calculates a third constituent risk score quantifying a likelihood of malfunction of the software deployment for the plurality of nodes based on the node-level feature data. As mentioned above, the third constituent risk score accounts for coverage risk that is derived from testing various hardware configurations.

Then, at operation 512, the deployment system determines a risk of software deployment failure based on the first constituent risk score, the second constituent risk score, and the third constituent risk score. In various examples, the risk of software deployment failure is calculated using a distance to target function to aggregate the three constituent risk scores.

Turning now to FIG. 5B, the process 500 proceeds to operation 514 in which the deployment system calculates a first constituent impact score quantifying a virtual machine density based on a number of virtual machines at each of the nodes. As mentioned above, accounting for virtual machine density recognizes that a failure at a node containing many virtual machines is more impactful than a failure at a node containing fewer virtual machines.

Then, at operation 516, the deployment system calculates a second constituent impact score quantifying a presence of an important entity operating at least one virtual machine at each of the nodes. Examples of important entities include government entities, critical service entities (e.g., hospitals), and sensitive data entities such as corporate users storing privileged information in the cloud-based platform.

Next, at operation 518, the deployment system classifies an importance of each of the virtual machines based on a volume of computing resources allocated to each individual virtual machine. As described above, the volume of computing resources allocated to each individual virtual machine can be compared against a threshold volume of computing resources such that virtual machines that satisfy the threshold volume of computing resources are deemed "important".

Subsequently, at operation 520, the deployment system calculates a third constituent impact score based on the classification of importance of the virtual machines. In various examples, a node that contains an "important" virtual machine may result in an elevated risk score indicating that extra care should be taken to avoid downtime for the "important" virtual machine.

Next, at operation 522, the deployment system determines an impact of software deployment failure based on based on the first constituent impact score, the second constituent impact score, and the third constituent impact score. Similar to the risk of software deployment failure, the impact of software deployment failure can be calculated by aggregating the first constituent impact score, the second constituent impact score, and the third constituent impact score using a distance to target method.

Then, at operation 524, the deployment system calculates a composite risk score based on the risk of software deployment failure and the impact of software deployment failure. As mentioned above, the composite risk score can be calculated as an average of the risk of software deployment failure and the impact of software deployment failure.

Finally, at operation 526, the deployment system generates a deployment recommendation for the software deployment based on the composite risk score. In various examples, the deployment recommendation is generated based on one or more threshold risk scores delineating deployment groups such as a PASS, a SEQUENTIAL, and a BLOCK deployment group as described above.

For ease of understanding, the process discussed in this disclosure is delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 500 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 500 may also be implemented in other ways. In addition, one or more of the operations of the process 500 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

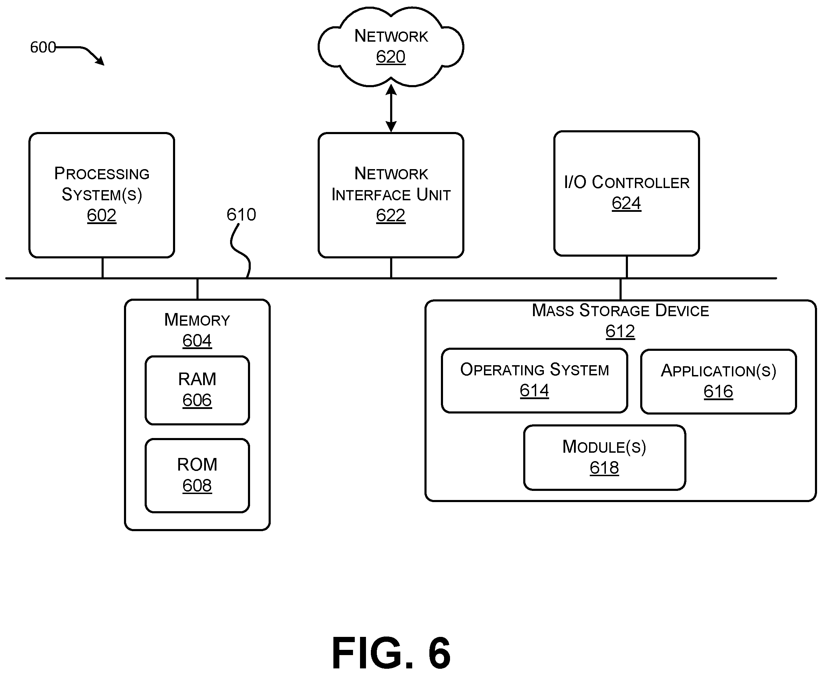

FIG. 6 shows additional details of an example computer architecture 600 for a device, capable of executing computer instructions (e.g., a module or a program component described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s). In various examples, the processing unit(s) of the processing system 602 are distributed. Stated another way, one processing unit of the processing system 602 may be located in a first location (e.g., a rack within a datacenter) while another processing unit of the processing system 602 is located in a second location separate from the first location. Moreover, the systems discussed herein can be provided as a distributed computing system such as a cloud service.

Processing unit(s), such as processing unit(s) of processing system 602, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, modules 618, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

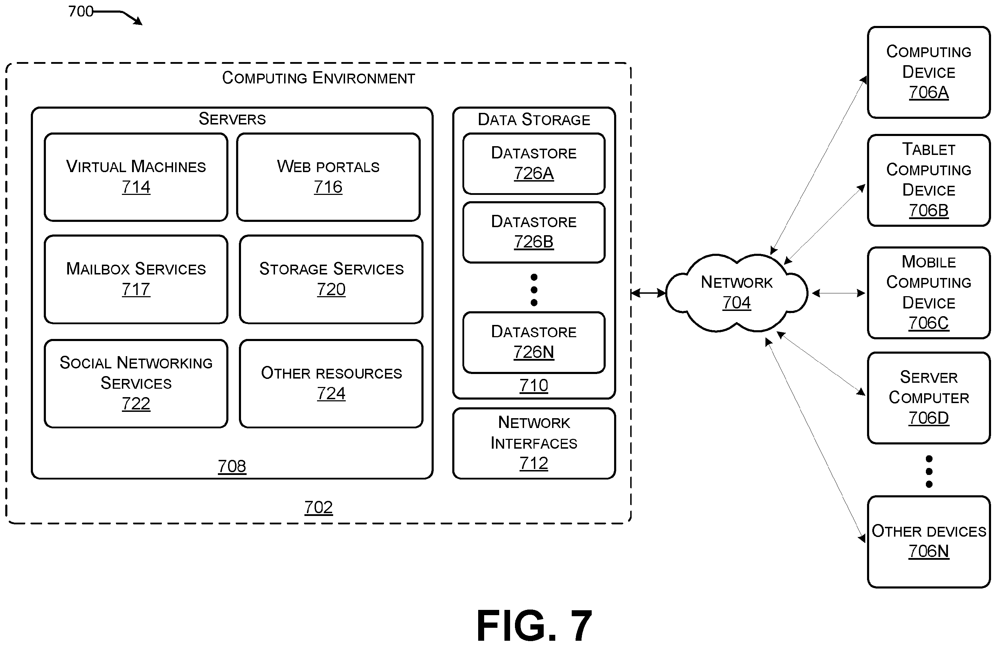

FIG. 7 depicts an illustrative distributed computing environment 700 capable of executing the software components described herein. Thus, the distributed computing environment 700 illustrated in FIG. 7 can be utilized to execute any aspects of the software components presented herein. For example, the distributed computing environment 700 can be utilized to execute aspects of the software components described herein.

Accordingly, the distributed computing environment 700 can include a computing environment 702 operating on, in communication with, or as part of the network 704. The network 704 can include various access networks. One or more client devices 706A-706N (hereinafter referred to collectively and/or generically as "computing devices 706") can communicate with the computing environment 702 via the network 704. In one illustrated configuration, the computing devices 706 include a computing device 706A such as a laptop computer, a desktop computer, or other computing device; a slate or tablet computing device ("tablet computing device") 706B; a mobile computing device 706C such as a mobile telephone, a smart phone, or other mobile computing device; a server computer 706D; and/or other devices 706N. It should be understood that any number of computing devices 706 can communicate with the computing environment 702.

In various examples, the computing environment 702 includes servers 708, data storage 710, and one or more network interfaces 712. The servers 708 can host various services, virtual machines, portals, and/or other resources. In the illustrated configuration, the servers 708 host virtual machines 714, Web portals 716, mailbox services 718, storage services 720, and/or social networking services 722. As shown in FIG. 7 the servers 708 also can host other services, applications, portals, and/or other resources ("other resources") 724.

As mentioned above, the computing environment 702 can include the data storage 710. According to various implementations, the functionality of the data storage 710 is provided by one or more databases operating on, or in communication with, the network 704. The functionality of the data storage 710 also can be provided by one or more servers configured to host data for the computing environment 700. The data storage 710 can include, host, or provide one or more real or virtual datastores 726A-726N (hereinafter referred to collectively and/or generically as "datastores 726"). The datastores 726 are configured to host data used or created by the servers 808 and/or other data. That is, the datastores 726 also can host or store web page documents, word documents, presentation documents, data structures, algorithms for execution by a recommendation engine, and/or other data utilized by any application program. Aspects of the datastores 726 may be associated with a service for storing files.

The computing environment 702 can communicate with, or be accessed by, the network interfaces 712. The network interfaces 712 can include various types of network hardware and software for supporting communications between two or more computing devices including the computing devices and the servers. It should be appreciated that the network interfaces 712 also may be utilized to connect to other types of networks and/or computer systems.

It should be understood that the distributed computing environment 700 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 700 provides the software functionality described herein as a service to the computing devices. It should be understood that the computing devices can include real or virtual machines including server computers, web servers, personal computers, mobile computing devices, smart phones, and/or other devices. As such, various configurations of the concepts and technologies disclosed herein enable any device configured to access the distributed computing environment 700 to utilize the functionality described herein for providing the techniques disclosed herein, among other aspects.

The disclosure presented herein also encompasses the subject matter set forth in the following clauses.

Example Clause A, a method for calculating a composite risk score for a software deployment in a computing cluster containing a plurality of nodes each containing at least one virtual machine, the method comprising: collecting node-level feature data from the plurality of nodes to generate a training dataset; training a prediction model to calculate a first constituent risk score quantifying deployment risk associated with the software deployment and the plurality of nodes based on the training dataset; identifying a rate of virtual machine interruptions of the plurality of nodes associated with deployment issues; calculating, by the prediction model, a second constituent risk score quantifying annual interruption rate impact risk associated with the plurality of nodes and the software deployment based on the rate of virtual machine interruptions of the plurality of nodes associated with deployment issues; calculating a third constituent risk score quantifying likelihood of malfunction of the software deployment for the plurality of nodes based on the node-level feature data; determining a risk of a software deployment failure based on the first constituent risk score, the second constituent risk score, and the third constituent risk score; calculating a first constituent impact score quantifying virtual machine density based on a number of virtual machines at each of the plurality of nodes; calculating a second constituent impact score quantifying presence of an important entity operating at least one virtual machine at each of the plurality of nodes; classifying an importance of each of the one or more virtual machines of each of the plurality of nodes based on a volume of computing resources allocated to each of the virtual machines; calculating a third constituent impact score based on the classification of the importance of each of the virtual machines; determining an impact of the software deployment failure based on the first constituent impact score, the second constituent impact score, and the third constituent impact score; calculating a composite risk score based on the risk of the software deployment failure and the impact of the software deployment failure; and generating a deployment recommendation for the software deployment based on the composite risk score.

Example Clause B, the method of Example Clause A, wherein the node-level feature data includes a virtual machine computing resource configuration, a virtual machine family, a virtual machine generation, a guest operating system of the plurality of virtual machines of each of the plurality of nodes.

Example Clause C, the method of Example Clause A or Example Clause B, wherein the training dataset is generated from the node-level feature data by a one-hot encoder.

Example Clause D, the method of any one of Example Clause A through C, wherein the rate of virtual machine interruptions is identified for interruptions which occur within a predetermined time window.

Example Clause E, the method of any one of Example Clause A through D, wherein the likelihood of malfunction of the software deployment for the plurality of nodes is calculated based on a subset of the node-level feature data.

Example Clause F, The method of any one of Example Clause A through E, wherein the important entity comprises at least one of a government entity, an essential service entity, and a sensitive data entity.

Example Clause G, the method of any one of Example Clause A through F, wherein an individual virtual machine is classified as an important virtual machine in an event that: the volume of computing resources assigned to the virtual machine satisfies a threshold volume of computing resources; or the individual virtual machine is operated by an important entity.

Example Clause H, the method of any one of Example Clause A through G, wherein: the deployment recommendation comprises an assigned label for the computing cluster; and the assigned label is associated with a deployment action to be taken with respect to releasing the software deployment to the computing cluster.

Example Clause I, the method of any one of Example Clause A through H, further comprising: evaluating performance data of the software deployment following a release of the software deployment within the computing cluster; and adjusting the training dataset based on the performance data.

Example Clause J, the method of any one of Example Clause A through I, wherein the deployment recommendation is displayed in a dashboard user interface.

Example Clause K, a method for calculating a composite risk score for a software deployment in a computing cluster containing a plurality of nodes, each node containing one or more virtual machines, the method comprising: determining a risk of a software deployment failure based on: a first constituent risk score quantifying deployment risk associated with the software deployment and the plurality of nodes; a second constituent risk score quantifying annual interruption rate impact risk associated with the software deployment and the plurality of nodes; and a third constituent risk score quantifying likelihood of malfunction of the software deployment for the plurality of nodes; determining an impact of the software deployment failure based on: a first constituent impact score based on a number of virtual machines at each of the plurality of nodes; a second constituent impact score quantifying presence of an important entity operating a virtual machine at each of the plurality of nodes; and a third constituent impact score quantifying an importance of each of the virtual machines; calculating a composite risk score based on the risk of the software deployment failure and the impact of the software deployment failure; and generating a deployment recommendation for the software deployment based on the composite risk score.

Example Clause L, the method of Example Clause K, wherein the first constituent risk score quantifying deployment risk is calculated by a prediction model that is trained by a training dataset comprising encoded node-level feature data.

Example Clause M, the method of Example Clause K or Example Clause L, wherein the second constituent risk score quantifying annual interruption rate impact risk is calculated by a prediction model that is trained by a training dataset comprising encoded node-level feature data.

Example Clause N, the method of any one of Example Clause K through M, wherein determining the risk of software failure comprises aggregating the first constituent risk score, the second constituent risk score, and the third constituent risk score using a distance to target function.

Example Clause O, the method of any one of Example Clause K through N, wherein determining the impact of software failure comprises aggregating the first constituent impact score, the second constituent impact score, and the third constituent impact score using a distance to target function.

Example Clause P, the method of any one of Example Clause K through O, wherein calculating the composite risk score comprises calculating an average of the risk of a software deployment failure and the impact of the software deployment failure.

Example Clause Q, the method of any one of Example Clause K through P, wherein generating the deployment recommendation for the software deployment based on the composite risk score comprises classifying the composite risk score against one or more threshold composite risk scores.

Example Clause R, a system for calculating a composite risk score for a software deployment in a computing cluster containing a plurality of nodes, each node containing one or more virtual machines, the system comprising: a processing system; and a computer readable storage medium having encoded thereon instructions that when executed by the processing system causes the system to perform operations comprising: determining a risk of a software deployment failure based on: a first constituent risk score quantifying deployment risk associated with the software deployment and the plurality of nodes; a second constituent risk score quantifying annual interruption rate impact risk associated with the software deployment and the plurality of nodes; and a third constituent risk score quantifying likelihood of malfunction of the software deployment for the plurality of nodes; determining an impact of the software deployment failure based on: a first constituent impact score based on a number of virtual machines at each of the plurality of nodes; a second constituent impact score quantifying presence of an important entity operating a virtual machine at each of the plurality of nodes; and a third constituent impact score quantifying an importance of each of the virtual machines; calculating a composite risk score based on the risk of the software deployment failure and the impact of the software deployment failure; and generating a deployment recommendation for the software deployment based on the composite risk score.

Example Clause S, the system of Example Clause R, wherein the first constituent risk score quantifying the deployment risk is calculated by a prediction model that is trained by a training dataset comprising encoded node-level feature data.

Example Clause T, the system of Example Clause R or Example Clause S, wherein generating the deployment recommendation for the software deployment based on the composite risk score comprises classifying the composite risk score against one or more threshold composite risk scores.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for calculating a composite risk score (136) for a software deployment (138) in a computing cluster (102) containing a plurality of nodes (104A-104N) each containing at least one virtual machine (106A-106N), the method comprising:

    collecting node-level feature data (108) from the plurality of nodes (104A-104N) to generate a training dataset (114);

training a prediction model (118) to calculate a first constituent risk score (120) quantifying deployment risk associated with the software deployment (138) and the plurality of nodes (104A-104N) based on the training dataset (114);

identifying a rate of virtual machine interruptions (224) of the plurality of nodes (104A-104N) associated with deployment issues;

calculating, by the prediction model (118), a second constituent risk score (122) quantifying annual interruption rate impact risk associated with the plurality of nodes (104A-104N) and the software deployment based on the rate of virtual machine interruptions (224) of the plurality of nodes (104A-104N) associated with deployment issues;

calculating a third constituent risk score (124) quantifying likelihood of malfunction of the software deployment (138) for the plurality of nodes (104A-104N) based on the node-level feature data (108);

determining a risk of a software deployment failure (126) based on the first constituent risk score (120), the second constituent risk score (122), and the third constituent risk score (124);

calculating a first constituent impact score (128) quantifying virtual machine density based on a number of virtual machines (106A-106N) at each of the plurality of nodes (104A-104N);

calculating a second constituent impact score (130) quantifying presence of an important entity operating at least one virtual machine (106A) at each of the plurality of nodes (104A-104N);

classifying an importance of each of the one or more virtual machines (106A-106N) of each of the plurality of nodes (104A-104N) based on a volume of computing resources (216) allocated to each of the virtual machines (106A-106N);

calculating a third constituent impact score (132) based on the classification of the importance of each of the virtual machines (106A-106N);

determining an impact of the software deployment failure (134) based on the first constituent impact score (128), the second constituent impact score (130), and the third constituent impact score (132);

calculating a composite risk score (136) based on the risk of the software deployment failure (126) and the impact of the software deployment failure (134); and

generating a deployment recommendation (140) for the software deployment (138) based on the composite risk score (136).

2. The method of claim 1, wherein the node-level feature data includes a virtual machine computing resource configuration, a virtual machine family, a virtual machine generation, a guest operating system of the plurality of virtual machines of each of the plurality of nodes.

3. The method of claim 1 or claim 2, wherein the training dataset is generated from the node-level feature data by a one-hot encoder.

4. The method of any of claims 1 to 3, wherein the rate of virtual machine interruptions is identified for interruptions which occur within a predetermined time window.

5. The method of any of claims 1 to 4, wherein the likelihood of malfunction of the software deployment for the plurality of nodes is calculated based on a subset of the node-level feature data.

6. The method of any of claims 1 to 5, wherein the important entity comprises at least one of a government entity, an essential service entity, and a sensitive data entity.

7. The method of any of claims 1 to 6, wherein an individual virtual machine is classified as an important virtual machine in an event that:

the volume of computing resources assigned to the virtual machine satisfies a threshold volume of computing resources; or
the individual virtual machine is operated by an important entity.

8. The method of any of claims 1 to 7, wherein:

the deployment recommendation comprises an assigned label for the computing cluster; and
the assigned label is associated with a deployment action to be taken with respect to releasing the software deployment to the computing cluster.

9. The method of any of claim to 8, further comprising:

    evaluating performance data of the software deployment following a release of the software deployment within the computing cluster; and
    adjusting the training dataset based on the performance data.

10. A method for calculating a composite risk score (136) for a software deployment (138) in a computing cluster (102) containing a plurality of nodes (104A-104N), each node (104A-104N) containing one or more virtual machines (106A-106N), the method comprising:

    determining a risk of a software deployment failure (126) based on:

       a first constituent risk score (120) quantifying deployment risk associated with the software deployment (138) and the plurality of nodes (104A-104N);
       a second constituent risk score (122) quantifying annual interruption rate impact risk associated with the software deployment (138) and the plurality of nodes (104A-104N); and
       a third constituent risk score (124) quantifying likelihood of malfunction of the software deployment (138) for the plurality of nodes (104A-104N);

    determining an impact of the software deployment failure (134) based on:

       a first constituent impact score (128) based on a number of virtual machines (106A-106N) at each of the plurality of nodes (104A-104N);
       a second constituent impact score (130) quantifying presence of an important entity operating a virtual machine (106A-106N) at each of the plurality of nodes (104A-104N); and
       a third constituent impact score (132) quantifying an importance of each of the virtual machines (106A-106N);

    calculating a composite risk score (136) based on the risk of the software deployment failure (126) and the impact of the software deployment failure (134); and
    generating a deployment recommendation (140) for the software deployment (138) based on the composite risk score (136).

11. The method of claim 10, wherein the first constituent risk score quantifying deployment risk is calculated by a prediction model that is trained by a training dataset comprising encoded node-level feature data.

12. The method of claim 10 or claim 11, wherein the second constituent risk score quantifying annual interruption rate impact risk is calculated by a prediction model that is trained by a training dataset comprising encoded node-level feature data.

13. The method of any of claims 10 to 12, wherein determining the risk of software failure comprises aggregating the first constituent risk score, the second constituent risk score, and the third constituent risk score using a distance to target function.

14. The method of any of claims 10 to 13,

    wherein determining the impact of software failure comprises aggregating the first constituent impact score, the second constituent impact score, and the third constituent impact score using a distance to target function;
    wherein calculating the composite risk score comprises calculating an average of the risk of a software deployment failure and the impact of the software deployment failure; and/or
    wherein generating the deployment recommendation for the software deployment based on the composite risk score comprises classifying the composite risk score against one or more threshold composite risk scores.

15. A system for calculating a composite risk score for a software deployment in a computing cluster containing a plurality of nodes, each node containing one or more virtual machines, the system comprising:

    a processing system; and
    a computer readable storage medium having encoded thereon instructions that when executed by the processing system causes the system to perform operations comprising:

determining a risk of a software deployment failure (126) based on:

a first constituent risk score (120) quantifying deployment risk associated with the software deployment (138) and the plurality of nodes (104A-104N);
a second constituent risk score (122) quantifying annual interruption rate impact risk associated with the software deployment (138) and the plurality of nodes (104A-104N); and
a third constituent risk score (124) quantifying likelihood of malfunction of the software deployment (138) for the plurality of nodes (104A-104N);

determining an impact of the software deployment failure (134) based on:

a first constituent impact score (128) based on a number of virtual machines (106A-106N) at each of the plurality of nodes (104A-104N);
a second constituent impact score (130) quantifying presence of an important entity operating a virtual machine (106A-106N) at each of the plurality of nodes (104A-104N); and
a third constituent impact score (132) quantifying an importance of each of the virtual machines (106A-106N);

calculating a composite risk score (136) based on the risk of the software deployment failure (126) and the impact of the software deployment failure (134); and
generating a deployment recommendation (140) for the software deployment (138) based on the composite risk score (136).

FIG. 1

DEPLOYMENT SYSTEM 100

PREDICTION MODEL(S) 118

TRAINING DATASET 114
SELECTED FEATURES 116

DEPLOYMENT RISK 120

ANNUAL INTERRUPTION RATE IMPACT RISK 122

COVERAGE RISK 124

RISK OF SOFTWARE DEPLOYMENT FAILURE 126

VIRTUAL MACHINE DENSITY 128

IMPORTANT ENTITY PRESENCE 130

VIRTUAL MACHINE IMPORTANCE 132

IMPACT OF SOFTWARE DEPLOYMENT FAILURE 134

COMPOSITE RISK SCORE 136

DEPLOYMENT RECOMMENDATION 140

SOFTWARE DEPLOYMENT 138

NODE-LEVEL FEATURE DATA 108

CATEGORICAL FEATURE(S) 110

NUMERICAL FEATURE(S) 112

COMPUTING CLUSTER(S) 102

NODE 104A
VIRTUAL MACHINE(S) 106A

NODE 104B
VIRTUAL MACHINE(S) 106B

NODE 104C
VIRTUAL MACHINE(S) 106C

NODE 104N
VIRTUAL MACHINE(S) 106N

**FIG. 2**

EP 4 654 017 A1

FIG. 3

DEPLOYMENT DASHBOARD USER INTERFACE 400

COMPOSITE RISK SCORE DECISION(S) 402

| GROUPS 404 | No. OF CLUSTERS 406 |
|---|---|
| BLOCK | 265 |
| PASS | 3906 |
| SEQUENTIAL | 261 |
| TOTAL | 4432 |

DEPLOYED CLUSTERS 408

0 — 4193 — 4432

DEPLOYED NODES 410

0 — 2.66M — 2.7M

| CLUSTER | GENERATION | OS VERSION |
|---|---|---|
| ALL ∨ | ALL ∨ | ALL ∨ |

COMPOSITE RISK SCORE DECISION DETAIL 412

CRS_DECISION ✕

BLOCK 414

PASS 3906
BLOCK 265
SEQUENTIAL 261

COUNT OF CLUSTER 4432

BLOCK_REASON 416 ✕

No-Go FOR NODE REGRESSION RATE 73
No-Go FOR ANNUAL INTERRUPTION RATE IMPACT 70
MANUAL BLOCK 56
No COVERAGE 44

FIG. 4

23

500

> COLLECT NODE-LEVEL FEATURE DATA TO GENERATE TRAINING DATASET
> 502

> TRAIN PREDICTION MODEL TO CALCULATE FIRST CONSTITUENT RISK SCORE
> QUANTIFYING DEPLOYMENT RISK
> 504

> IDENTIFY RATE OF VIRTUAL MACHINE INTERRUPTIONS ASSOCIATED WITH
> DEPLOYMENT ISSUES
> 506

> CALCULATE SECOND CONSTITUENT RISK SCORE QUANTIFYING ANNUAL
> INTERRUPTION RATE IMPACT RISK
> 508

> CALCULATE THIRD CONSTITUENT RISK SCORE QUANTIFYING LIKELIHOOD OF
> MALFUNCTION
> 510

> DETERMINE RISK OF SOFTWARE DEPLOYMENT FAILURE BASED ON THREE
> CONSTITUENT RISK SCORES
> 512

# FIG. 5A

500

```
┌─────────────────────────────────────────────────────────────┐
│  CALCULATE FIRST CONSTITUENT IMPACT SCORE QUANTIFYING         │
│  VIRTUAL MACHINE DENSITY                                      │
│                         514                                  │
└─────────────────────────────────────────────────────────────┘
                              │
                              ▼
┌─────────────────────────────────────────────────────────────┐
│  CALCULATE SECOND CONSTITUENT IMPACT SCORE QUANTIFYING        │
│  PRESENCE OF IMPORTANT ENTITIES                               │
│                         516                                  │
└─────────────────────────────────────────────────────────────┘
                              │
                              ▼
┌─────────────────────────────────────────────────────────────┐
│  CLASSIFYING IMPORTANCE OF EACH VIRTUAL MACHINE BASED ON      │
│  VOLUME OF COMPUTING RESOURCES ALLOCATED TO EACH             │
│                         518                                  │
└─────────────────────────────────────────────────────────────┘
                              │
                              ▼
┌─────────────────────────────────────────────────────────────┐
│  CALCULATE THIRD CONSTITUENT IMPACT SCORE BASED ON            │
│  CLASSIFICATION OF IMPORTANCE OF EACH VIRTUAL MACHINE        │
│                         520                                  │
└─────────────────────────────────────────────────────────────┘
                              │
                              ▼
┌─────────────────────────────────────────────────────────────┐
│  DETERMINE IMPACT OF SOFTWARE DEPLOYMENT FAILURE BASED ON     │
│  THREE IMPACT SCORES                                         │
│                         522                                  │
└─────────────────────────────────────────────────────────────┘
                              │
                              ▼
┌─────────────────────────────────────────────────────────────┐
│  CALCULATE COMPOSITE RISK SCORE BASED ON RISK OF SOFTWARE     │
│  DEPLOYMENT FAILURE AND IMPACT OF SOFTWARE DEPLOYMENT         │
│  FAILURE                                                      │
│                         524                                  │
└─────────────────────────────────────────────────────────────┘
                              │
                              ▼
┌─────────────────────────────────────────────────────────────┐
│  GENERATE DEPLOYMENT RECOMMENDATION FOR SOFTWARE DEPLOYMENT   │
│  BASED ON COMPOSITE RISK SCORE                               │
│                         526                                  │
└─────────────────────────────────────────────────────────────┘
```

# FIG. 5B

600

PROCESSING SYSTEM(S) 602

MEMORY 604
RAM 606
ROM 608

610

NETWORK 620

NETWORK INTERFACE UNIT 622

I/O CONTROLLER 624

MASS STORAGE DEVICE 612

OPERATING SYSTEM 614

APPLICATION(S) 616

MODULE(S) 618

**FIG. 6**

**FIG. 7**

EP 4 654 017 A1

| | Europäisches Patentamt<br>European Patent Office<br>Office européen des brevets | **EUROPEAN SEARCH REPORT** | **Application Number**<br>**EP 25 17 6375** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/205509 A1 (BARAL PALLAVI [US] ET AL) 29 June 2023 (2023-06-29)<br>* paragraphs [0058] - [0062], [0078], [0219], [0220] *<br>* paragraph [0081] * | 1-15 | INV.<br>G06F11/00<br>G06N20/00<br>G06Q10/0635 |
| A | Ullah Faheem: "Towards Quality-centric Design and Evaluation of Big Data Cyber Security Analytics Systems",<br>,<br>28 February 2020 (2020-02-28),<br>XP055945940,<br>Retrieved from the Internet:<br>URL:https://digital.library.adelaide.edu.au/dspace/bitstream/2440/126061/1/Ullah2020_PhD.pdf<br>[retrieved on 2022-07-25]<br>* Section 4.3 * | 1-15 | |
| A | SEBASTIEN LEVY ET AL: "Predictive and Adaptive Failure Mitigation to Avert Production Cloud VM Interruptions",<br>USENIX, USENIX, THE ADVANCED COMPUTING SYSTEMS ASSOCIATION<br>,<br>4 November 2020 (2020-11-04), pages 1-17,<br>XP061053107,<br>Retrieved from the Internet:<br>URL:http://www.usenix.org/system/files/osdi20-levy.pdf<br>[retrieved on 2020-11-04]<br>* Section 4.4.2 * | 1-15 | **TECHNICAL FIELDS SEARCHED (IPC)**<br><br>G06F<br>G06N<br>G06Q |
| A | US 2021/342146 A1 (IGNATYEV OLEKSIY [US] ET AL) 4 November 2021 (2021-11-04)<br>* paragraphs [0025], [0030], [0045] * | 1-15 | |

The present search report has been drawn up for all claims

| Place of search | Date of completion of the search | Examiner |
|---|---|---|
| Munich | 9 October 2025 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 6375

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | | Publication date |
|---|---|---|---|---|
| US 2023205509 A1 | 29-06-2023 | CN | 118401952 A | 26-07-2024 |
| | | EP | 4457714 A1 | 06-11-2024 |
| | | US | 2023205509 A1 | 29-06-2023 |
| | | WO | 2023129244 A1 | 06-07-2023 |
| US 2021342146 A1 | 04-11-2021 | NONE | | |

EPO FORM P0459

For more details about this annex : see Official Journal of the European Patent Office, No. 12/82